(19) Europäisches Patentamt
European Patent Office
Office européen des brevets

(11) Veröffentlichungsnummer: **0 413 205 A2**

(12) **EUROPÄISCHE PATENTANMELDUNG**

(21) Anmeldenummer: **90114809.8**

(51) Int. Cl.5: **C08G 77/448**, C08G 64/18

(22) Anmeldetag: **02.08.90**

(30) Priorität: **15.08.89 DE 3926850**

(43) Veröffentlichungstag der Anmeldung: **20.02.91 Patentblatt 91/08**

(84) Benannte Vertragsstaaten: **DE FR GB IT**

(71) Anmelder: **BAYER AG**

**D-5090 Leverkusen 1 Bayerwerk(DE)**

(72) Erfinder: **Horlacher, Peter, Dr.**
**Ginsterweg 4**
**D-7913 Senden(DE)**
Erfinder: **Serini, Volker, Dr.**
**Sebastian-Kneipp-Weg 2**
**D-4150 Krefeld(DE)**
Erfinder: **Freitag, Dieter, Dr.**
**Hasenheide 10**
**D-4150 Krefeld(DE)**
Erfinder: **Grigo, Ulrich, Dr.**
**Michelsheide 9**
**D-4152 Kempen 3(DE)**
Erfinder: **Idel, Karsten-Josef, Dr.**
**Am Schwarzkamp 38**
**D-4150 Krefeld(DE)**
Erfinder: **Westeppe, Uwe, Dr.**
**Vogelskamp 72**
**D-4020 Mettmann(DE)**

(54) **Polysiloxan-Polycarbonat-Blockcopolymere auf Basis spezieller Dihydroxydiphenylcycloalkane.**

(57) Polydiorganosiloxan-Polycarbonat-Blockcopolymere auf Basis von Dihydroxydiphenylcycloalkanen der Formel (I)

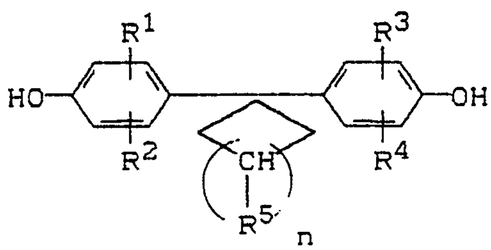

(I),

worin
$R^1$, $R^2$, $R^3$, $R^4$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl und $C_7$-$C_{12}$-Aralkyl, bevorzugt Phenyl-$C_1$-$C_4$-Alkyl, insbesondere Benzyl,
n 2 oder 3 und
die Reste $R^5$ unabhängig voneinander Wasserstoff, oder $C_1$-$C_{12}$-Alkyl bedeuten, mit der Maßgabe, daß mindestens einer der Reste $R^5$ ungleich Wasserstoff ist,
mit mittlerem Molekulargewicht $\overline{M}_w$ (Gewichtsmittel) von 10.000 bis 300.000, (ermittelt durch Ultrazentrifugation oder Streulichtmessung), und einem Gehalt an Polycarbonat, das Dihydroxydiphenylcycloalkane der Formel I und gegebenenfalls andere Diphenole einkondensiert enthält, von 75 Gew.-% bis 99,0 Gew.-% und einem Gehalt an Polydiorganosiloxan mit einem Polymerisationsgrad von $P_n$ 5 - 300, von 25 Gew.-% bis 1 Gew.-%.

EP 0 413 205 A2

# POLYSILOXAN-POLYCARBONAT-BLOCKCOPOLYMERE AUF BASIS SPEZIELLER DIHYDROXYDIPHENYL-CYCLOALKANE

Gegenstand der Erfindung sind thermoplastische Polydiorganosiloxan-Polycarbonat-Blockcopolymere auf Basis von Dihydroxydiphenylcycloalkanen der Formel (I)

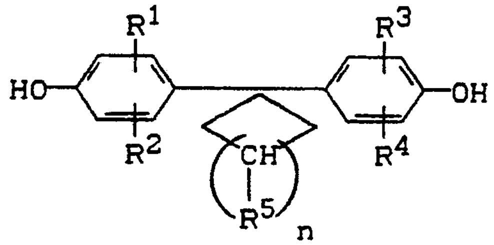
(I),

worin
$R^1$, $R^2$, $R^3$, $R^4$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl und $C_7$-$C_{12}$-Aralkyl, bevorzugt Phenyl-$C_1$-$C_4$-Alkyl, insbesondere Benzyl,
n 2 oder 3 und
die Reste $R^5$ unabhängig voneinander Wasserstoff, oder $C_1$-$C_{12}$-Alkyl bedeuten, mit der Maßgabe, daß mindestens einer der Reste $R^5$ ungleich Wasserstoff ist.

Bevorzugt ist $R^5$ ein geradkettiger $C_1$-$C_5$-Alkylrest oder ein verzweigter $C_3$-$C_8$-Alkylrest.

Die erfindungsgemäßen Polydiorganosiloxan-Polycarbonat-Blockcopolymere zeichnen sich durch Wärmeformbeständigkeit, Festigkeit, gute UV-Stabilität und Zähigkeit aus.

Polydiorganosiloxan-Polycarbonat-Blockcopolymere sind grundsätzlich bekannt (vgl. US-PS 3 189 662, 3 419 634, DE-OS 3 334 782, 3 506 472, EP-A 122 535, 135 794).

Die erfindungsgemäßen thermoplastischen Polydiorganosiloxan-Polycarbonat-Blockcopolymere besitzen ein mittleres Molekulargewicht $\overline{M}_w$ (Gewichtsmittel) von 10.000 bis 300.000, vorzugsweise von etwa 15.000 bis 80.000 (ermittelt in bekannter Weise durch Ultrazentrifugation oder Streulichtmessung), einen Gehalt an Polycarbonat von 75 Gew.-% bis 99,0 Gew.-% und einen Gehalt an Polydiorganosiloxan von 25 Gew.-% bis 1,0 Gew.-%; sie können hergestellt werden aus

a) $\alpha,\omega$-Bishydroxyaryloxy-polydiorganosiloxanen mit einem Polymerisationsgrad Pn von 5 bis 300, vorzugsweise von 20 bis 160, vorzugsweise solchen der Formel (II),
b) Diphenolen der Formel (I) (5 bis 100 Mol-%, bevorzugt 10 bis 80 Mol-%) und gegebenenfalls zusätzlich solchen der Formel (III) (0 bis 95 Gew.-%, bevorzugt 90 bis 20 Gew.-%), gegebenenfalls
c) Kettenabbrechern und gegebenenfalls
d) Verzweigern, durch Zweiphasengrenzflächenpolykondensation mit Carbonatspendern.

Geeignete $\alpha,\omega$-Bishydroxy-aryloxy-polydiorganosiloxane a) sind z.B. aus US-PS 3 419 634 bekannt.

Bevorzugte $\alpha,\omega$-Bishydroxyaryloxy-polydiorganosiloxane sind solche der Formel (II)

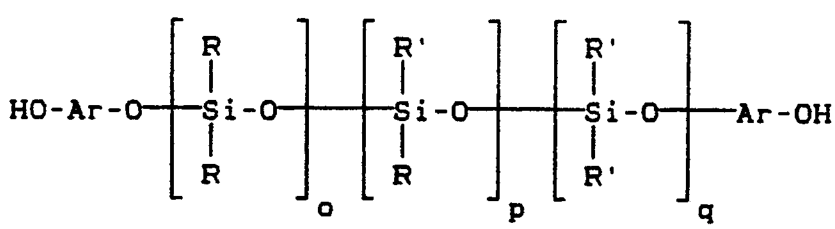
(II),

worin
Ar den Rest eines Diphenols der Formel (I) oder der Formel (III) ohne die beiden Hydroxylgruppen und
R und R′ lineares Alkyl, verzweigtes Alkyl, Alkenyl, halogeniertes lineares Alkyl, halogeniertes verzweigtes Alkyl, Aryl oder halogeniertes Aryl, vorzugsweise Methyl bedeuten,
und
o, p, q ganze Zahlen bedeuten, für die gilt $n = o+p+q = 5$ bis 300, vorzugsweise 20 bis 160.

In Formel (II) sind die Reste R und R′ unabhängig voneinander. Sie sind bevorzugt $C_1$-$C_{20}$-Alkyl, $C_2$-$C_6$-Alkenyl, $C_6$-$C_{14}$-Aryl. Halogeniert bedeutet teilweise oder vollständig chloriert, bromiert oder fluoriert.

Besonders bevorzugt ist R und R′ Methyl, Ethyl, Propyl, n-Butyl, tert.-Butyl, Vinyl, Phenyl, Naphthyl, Chlormethyl, Trifluorpropyl, Perfluorbutyl und Perfluoroctyl.

Diphenole (b) sind Diphenole der oben angegebenen Formel (I) und der Formel (III)

HO-Ar°-OH (III),

worin

Ar° gleiche oder verschiedene Arylenreste mit vorzugsweise 6 bis 30 C-Atomen sind.

Beispiele für Diphenole der Formel (III) sind:

Hydrochinon
Resorcin
Dihydroxydiphenyle
Bis-(hydroxyphenyl)-alkane
Bis-(hydroxyphenyl)-cycloalkane außer der Formel (I)
Bis-(hydroxyphenyl)-sulfide
Bis-(hydroxyphenyl)-ether
Bis-(hydroxyphenyl)-sulfoxide
Bis-(hydroxyphenyl)-sulfone und
α,ω-Bis-(hydroxyphenyl)-diisopropylbenzole

sowie entsprechende kernalkylierte und kernhalogenierte Verbindungen. Diese und weitere geeignete Diphenole sind z.B. in den US-PS 3 028 365 und 2 999 846 und in den DE-OS 1 570 703, 2 036 052, 2 063 050, 2 211 957, der FR-PS 561 518 und in "H. Schnell, Chemistry and Physics of Polycarbonates, Interscience Publishers, New York 1964" beschrieben.

Bevorzugte Diphenole der Formel (III) sind:

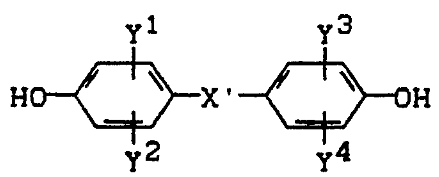

(IV),

worin

X′ eine Einfachbindung, $-CH_2-$, $-C(CH_3)_2-$, -O-, -S-,

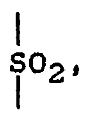

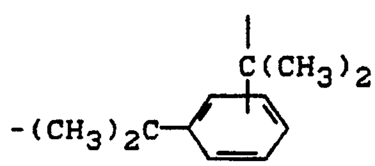

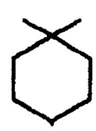

bedeuten und

$Y^1$ bis $Y^4$ gleich oder verschieden sind und Wasserstoff, $C_1$-$C_4$-Alkyl, vorzugsweise Methyl oder Halogen, vorzugsweise Chlor oder Brom, bedeuten. Bevorzugte Diphenole sind

2,2-Bis-(4-hydroxyphenyl)-propan
1,1-Bis-(4-hydroxyphenyl)-cyclohexan
2,2-Bis-(3,5-dichlor-4-hydroxyphenyl)-propan
2,2-Bis-(3,5-dibrom-4-hydroxyphenyl)-propan
2,2-Bis-(3,5-dimethyl-4-hydroxyphenyl)-propan
Bis-(3,5-dimethyl-4-hydroxyphenyl)-methan
Bis-(4-hydroxyphenyl)-sulfid.

Es können ein oder mehrere Diphenole der Formel (I) und gegebenenfalls daneben ein oder mehrere Diphenole der Formel (III) eingesetzt werden.

Diphenole der Formel (I) können in an sich bekannter Weise durch Kondensation von Phenolen der

Formel (V)

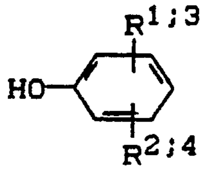

(V)

und Ketonen der Formel (VI)

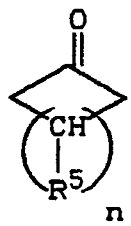

(VI)

hergestellt werden, wobei in den Formeln (V) und (VI) X, $R^1$, $R^2$, $R^3$, $R^4$, $R^5$ und n die für die Formel (I) angegebene Bedeutung haben.

Als Kettenabbrecher c) sind aromatische Verbindungen mit nur einer funktionellen Gruppe wie aromatische Säurehalogenide oder Phenole, insbesondere die gebräuchlichen Phenole wie p-tert.-Butylphenol, p-Chlorphenol, 2,4,6-Tribromphenol und Phenol in Mengen einsetzbar, die sich nach dem gewünschten Molekulargewicht der Blockcopolymeren bestimmen. Besonders bevorzugt sind als Kettenabbrecher Phenole der Formel (VII)

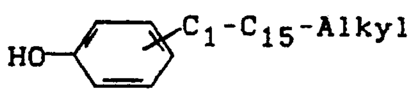

(VII).

Im allgemeinen werden 0,5 Mol-% bis 10,0 Mol-%, bezogen auf eingesetzte Diphenole, eingesetzt.

Als Verzweiger d) sind solche mit drei oder mehr als drei funktionellen Gruppen, insbesondere solche mit drei oder mehr als drei phenolischen Hydroxylgruppen einsetz bar, in den üblichen Mengen von 0,05 bis 2 Mol-%, bezogen auf eingebaute Diphenole.

Einige der verwendbaren Verbindungen mit drei oder mehr als drei phenolischen Hydroxylgruppen sind 2,4-Bis-(4-hydroxyphenyl-isopropyl)-phenol, 2,6-Bis-(2′-hydroxy-5′-methyl-benzyl)-4-methylphenol, 2-(4-Hydroxyphenyl)-2-(2,4-dihydroxyphenyl)-propan und 1,4-Bis-(4,4′-dihydroxytriphenyl-methyl)-benzol. Einige der sonstigen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Geeignete organische Lösungsmittel für die Zweiphasengrenzflächenpolykondensation sind die für die Herstellung aromatischer Polycarbonate bekannten wie beispielsweise Methylenchlorid oder Chlorbenzol.

Ihre Mengen werden vorzugsweise so gewählt, daß die Zweiphasengrenzflächenpolykondensation in 5 bis 20 %iger Lösung im organischen Lösungsmittel, vorzugsweise 10 bis 15 %iger Lösung, abläuft.

Geeignete basische Verbindungen für die Bildung der wäßrigen alkalischen Phase sind Lösungen von LiOH, NaOH, KOH, $Ca(OH)_2$ und/oder $Ba(OH)_2$ in Wasser.

Bei der Zweiphasengrenzflächenpolykondensation sind die Volumina von wäßrig-alkalischer Phase und gesamter organischer Phase vorzugsweise gleich.

Der pH-Wert der wäßrigen Phase ist während der Reaktion 9 bis 14, vorzugsweise 12 bis 13.

Geeignete Katalysatoren für die Zweiphasengrenzflächenpolykondensation sind die für die Polycarbonatsynthese bekannten tertiären aliphatischen Amine wie Trimethylamin, Triethylamin, n-Tripropylamin, n-Tributylamin oder N-Ethylpiperidin; gegebenenfalls können auch quartäre Ammoniumsalze wie beispielsweise Tetrabutylammoniumbromid eingesetzt werden. Es können je nach eingesetztem Diphenol 0,2 bis 5 Mol-%, für tetramethylsubstituierte Diphenole 5 bis 10 Mol-% Katalysator, bezogen jeweils auf die Gesamtmenge an Diphenolen b), eingesetzt werden.

Die Mengen von Diphenol b) und α,ω-Bishydroxyaryloxy-polydiorganosiloxan a) richten sich nach dem gewünschten Gehalt an Poly(diorganosiloxan)-Einheiten im Blockcopolymeren. Die Umsetzung der Reaktanten ist normalerweise quantitativ.

Die α,ω-Bishydroxyaryloxypolydiorganosiloxane und der Kettenabbrecher können bei der Zweiphasengrenzflächenpolykondensation zusammen mit den Diphenolen b) vor der Phosgeneinleitung zugegeben werden oder separat während oder nach der Phosgeneinleitung, in jedem Fall aber vor der Zugabe des Polykondensationskatalysators.

Als "Carbonatspender" für die Zweiphasengrenzflächenpolykondensation dienen in bekannter Weise Kohlensäurehalogenide, insbesondere Kohlensäurechloride, wie Phosgen, $COBr_2$, oder die Bischlorkohlensäureester von Diphenolen in entsprechender Menge, wobei jeweils pro Mol Halogen-Kohlensäure-Gruppe weniger als 1/2 Diphenol verwendet wird.

Die Polydiorganosiloxan-Polycarbonat-Blockcopolymeren können aus den Reaktionsmischungen wie aromatische Polycarbonate abgetrennt werden. Hierbei wird zunächst die organische, das Blockcopolymer gelöst enthaltende Phase abgetrennt, gewaschen und anschließend das Blockcopolymer durch Eindampfen der Lösung isoliert, wobei als Endstufe des Aufarbeitungsprozesses vorzugsweise ein Ausdampfextruder benutzt wird.

Die erfindungsgemäßen thermoplastischen Blockcopolymere können Alterungsschutzmittel enthalten, die ihre Stabilität wesentlich erhöhen. Zur Modifizierung können z.B. Ruß, Kieselgur, Kaolin, Tone, $CaF_2$, $CaCO_3$, Aluminiumoxide, Glasfasern und anorganische Pigmente sowohl als Füllstoffe als auch als Nukleierungsmittel zugesetzt werden. Ebenso können sie die für Polycarbonat üblichen Entformungsmittel, wie z.B. Glycerinstearat, enthalten.

Die erfindungsgemäßen Polydiorganosiloxan-Polycarbonat-Blockcopolymere sind thermoplastische Formmassen, die überall anwendbar sind, wo ihre wesentlichen Eigenschaften, Wärmeformbeständigkeit, Festigkeit, Zähigkeit und UV-Stabilität gefordert werden.

Die erfindungsgemäßen Polydiorganosiloxan-Polycarbonat-Blockcopolymeren können auch mit anderen, siloxanfreien, thermoplastischen Polycarbonaten auf Basis von Diphenolen der Formel (I) und (III) thermoplastische Formmassen bilden. Diese Polycarbonate haben mittlere Molekulargewichte $\overline{M}_w$ (Gewichtsmittel, durch Ultrazentrifugation oder Streulichtmessung bestimmt) von 10.000 bis 300.000. Der Gehalt der Mischung an Polydiorganosiloxanstruktureinheiten ist auch hier 25 bis 1,0 Gew.-%, bezogen jeweils auf Gesamtgewicht der Mischung.

Zur Herstellung solcher Mischungen sind auch Polydiorganosiloxan-Polycarbonat-Blockcopolymere mit einem Gehalt an Polydiorganosiloxanstruktureinheiten über 25 Gew.-%, vorzugsweise 40 bis 60 Gew.-%, und $\overline{M}_w$ von 15.000 bis 80.000 geeignet.

Solche Polydiorganosiloxan-Polycarbonat-Blockcopolymere können durch geeignete Wahl der Menge an Ausgangsprodukten hergestellt werden.

Die erfindungsgemäßen Polydiorganosiloxan-Polycarbonat-Blockcopolymeren können zur Herstellung von Formkörpern jeder Art nach bekannten Verfahren verwendet werden. Insbesondere können Formkörper durch Extrusion oder Spritzguß hergestellt werden.

Beispiele für herstellbare Formkörper sind Karosserieteile und Gehäuseteile, z.B. für elektrische Geräte und Apparaturen wie Haushaltsgeräte, Bauplatten und Folien.

Die relativen Lösungsviskositäten wurden in Dichlormethan bei 25° C und c = 5 g/l Lösung gemessen.

Die Kerbschlagzähigkeit wurde nach ISO 180 an Flachstäben (80 mm x 10 mm x 4 mm) ermittelt, die Wärmeformbeständigkeit nach Methode Vicat (B) gemäß DIN 53 460/ISO 360.

Beispiel 1

26,5 g (0,094 Mol) 1,1-Bis-(4-hydroxyphenyl)-3-methyl-cyclohexan, 6,75 g (0,17 Mol) NaOH und 385 g Wasser werden in einer Inertgas-Atmosphäre unter Rühren gelöst. Dann fügt man eine Lösung von 1,67 g des Polydimethylsiloxan-Blocks (Pn = 71) mit Bisphenol A-Endgruppen (= 5 Gew.-% $SiMe_2O$) und 0,22 g (2,3 mMol) Phenol in 190 ml Methylenchlorid zu. In die gut gerührte Lösung wurden bei pH 12 bis 13 und 21 bis 25° C 15,8 g (0,16 Mol) Phcsgen eingeleitet. Danach werden 0,14 ml Ethylpiperidin zugegeben und noch 45 Min. gerührt. Die bisphenolatfreie wäßrige Phase wird abgetrennt, die organische Phase, nach Ansäuern mit Phosphorsäure, mit Wasser neutral gewaschen und vom Lösungsmittel befreit.

$\eta_{rel}$: 1.279

Tg (DSC): 211,5° C

Beispiel 2

5,33 g (0,0019 Mol) 1,1-Bis-(4-hydroxyphenyl)-3-methyl-cyclohexan, 17,24 g (0,076 Mol) Bisphenol A, 6,75 g (0,17 Mol) NaOH und 385 g Wasser werden in einer Inert-gas-Atmosphäre unter Rühren gelöst. Dann fügt man eine Lösung van 1,37 g des Polydimethylsiloxan-Blocks (Pn = 71) mit Bisphenol A-Endgruppen (= 5 Gew.-% $SiMe_2O$) und 0,23 g (2,5 mMol) Phenol in 190 ml Methylenchlorid zu. In die gut gerührte Lösung wurden bei pH 12 bis 13 und 21 bis 25 °C 15,8 g (0,16 Mol) Phosgen geleitet. Danach werden 0,14 ml Ethylpiperidin zugegeben und noch 45 Min. gerührt. Die bisphenolatfreie wäßrige Phase wird abgetrennt, die organische Phase, nach Ansäuern mit Phosphorsäure, mit Wasser neutral gewaschen und vom Lösungsmittel befreit.

| | Kerbschlagzähigkeit n. ISO 180 | |
|---|---|---|
| $\eta_{rel}$: 1.307 | $a_k$ (kJ/m$^2$) | |
| Vicat: 159° C | 23° C | 25,1 |

Beispiel 3

35,72 g (0,094 Mol) 1,1-Bis-(4-hydroxyphenyl)-4-(1,1,3,3-tetramethylbutyl)-cyclohexan, 6,75 g (0,17 Mol) NaOH und 385 g Wasser werden in einer Inertgas-Atmosphäre unter Rühren gelöst. Dann fügt man eine Lösung von 2,20 g des Polydimethylsiloxan-Blocks (Pn = 71) mit Bisphenol A-Endgruppen (= 5 Gew.-% $SiMe_2O$) und 0,17 g (1,8 mMol) Phenol in 190 ml Methylenchlorid zu. In die gut gerührte Lösung wurden bei pH 12 bis 13 und 21 bis 25 °C 15,8 g (0,16 Mol) Phosgen eingeleitet. Danach werden 0,14 ml Ethylpiperidin zugegeben und noch 45 Min. gerührt. Die bisphenolatfreie wäßrige Phase wird abgetrennt, die organische Phase, nach Ansäuern mit Phosphorsäure, mit Wasser neutral gewaschen und vom Lösungsmittel befreit.

$\eta_{rel}$: 1.268
Tg (DSC): 177 °C

**Ansprüche**

1. Polydiorganosiloxan-Polycarbonat-Blockcopolymere auf Basis von Dihydroxydiphenylcycloalkanen der Formel (I)

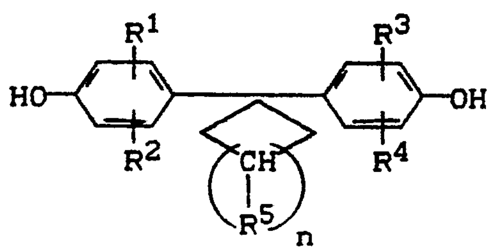

(I),

worin

$R^1$, $R^2$, $R^3$, $R^4$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl und $C_7$-$C_{12}$-Aralkyl, bevorzugt Phenyl-$C_1$-$C_4$-Alkyl, insbesondere Benzyl,

n 2 oder 3 und

die Reste $R^5$ unabhängig voneinander Wasserstoff oder $C_1$-$C_{12}$-Alkyl bedeuten, mit der Maßgabe, daß mindestens einer der Reste $R^5$ ungleich Wasserstoff ist

mit mittlerem Molekulargewicht $\overline{M}_w$ (Gewichtsmittel) von 10.000 bis 300.000, (ermittelt durch Ultrazentrifugation oder Streulichtmessung), und einen Gehalt an Carbonat, das Dihydroxydiphenylcycloalkane der Formel I und gegebenenfalls andere Diphenole einkondensiert enthält, von 75 Gew.-% bis 99,0 Gew.-% und einem Gehalt an Polydiorganosiloxan von 25 Gew.-% bis 1 Gew.-%.

2. Polydiorganosiloxan-Polycarbonat-Blockcopolymere gemäß Anspruch 1, in denen das Polysiloxan der

Rest eines $\alpha,\omega$-Bishydroxyaryloxypolysiloxans mit einem Polymersationsgrad von 5 bis 300 ist.

3. Verwendung des Polydiorganosiloxan-Polycarbonat-Blockcopolymerisats des Anspruchs 1 als thermoplastische Formmassen oder als Bestandteil in thermoplastischen Formmassen.